# EUROPEAN PATENT APPLICATION

(11) **EP 1 912 092 A1**
(43) Date of publication of application: **16.04.2008**
(21) Application number: 06425715.7
(22) Date of filing: 17.11.2006
(51) Int. Cl.: G02C 5/14, G02C 5/20

(54) **Side-piece for eyeglasses**

(30) Priority: 11.10.2006 IT PD20060377
(71) Applicant: Cebe S.A., 39400 Morez (FR)
(72) Inventor: De Martin, Marzio, 32040 Vigo di Cadore (BL) (IT)
(74) Representative: Gallo, Luca

(57) **Abstract**

Side-piece for eyeglasses in particular of the type for sports activities, formed by a bar-like linking piece hinged at a first end with the front frame of a pair of glasses and at a second end with a long flat part by means of adjusting means. The long flat part extends from the connection with the linking piece in the form of two arms, a first arm of which extends as an extension of the linking piece and is able to press with a first gripping surface behind the ear and a second arm of which extends partly towards the rear along the linking piece and is able to press with a second gripping surface in the temple zone.

## Description

### Technical field

The present invention relates to a side-piece for eyeglasses.

The side-piece in question is advantageously intended to be used in the manufacture of frames for eyeglasses of any kind and, in particular, of the type intended for sports activities.

Therefore, the side-piece according to the present invention is classifiable within the industrial sector relating to the manufacture of eyeglasses or also the production of sports articles.

### Background art

As is known in the sector relating to the production of eyeglasses and in particular glasses for sports activities, for some time there has been a particularly pressing need to introduce onto the market side-pieces which are able to provide the glasses with good stability, i.e. a stable and firm fit on the user's head, in order to prevent the glasses from moving or even falling during a normal sports activity such as, for example, running, climbing, skiing or other activity.

In general, glasses of the conventional type, when they are worn, are supported by the nose and the ears. The side-pieces usually extend with their end part so as to grip the head behind the ears where the skull bone has a depression which favours supporting of the glasses. In this position, however, the glasses 2 are free to rotate about a pivot which is situated at the point where the side-piece rests above the ear. This freedom of movement is an obvious drawback especially in the case of sports activities.

In order to overcome this drawback various designs of side-pieces aimed at improving precisely the stability of the glasses have been proposed on the market.

A first design envisages forming the end part of the side-pieces so as to exert a strong pressure on the user's head.

In this way the rotation of the glasses is at least partly prevented by the frictional force exerted by the end part which rests on the user's neck.

However, when carrying out a normal sports activity (running, cycling, climbing or other activity), during which the glasses are subject to stresses, this friction exerted by the end part of the side-piece is not sufficient to hold the glasses in position, the latter in fact continuing at least partly to move up and down in an undesirable manner about the abovementioned pivot point close to the ear, tending to lift from the nose.

A major drawback of this solution consists in the fact this end part of the side-piece, although it has a widened form, results in an uncomfortable pressure which increases the longer the glasses are worn.

In other words, this design, although improving the stability of the glasses, results in their being significantly less comfortable.

A second design of a side-piece is described, for example, in US patent No. 5,440,356 and comprises in addition a pressure bar hinged centrally on the free end of the side-piece so as to increase the pressure points of the glasses on the user's head.

This pressure bar extends from the hinge with two arms which come into contact with the user's neck behind the ears.

This side-piece, although improving the stability and comfort compared to the previous side-pieces owing precisely to the increased number of gripping points resulting from the additional pressure bar, are unable to guarantee however a satisfactory stability of the glasses able to meet the requirements for free and unhampered use especially in a sporting environment.

A third design of side-piece, described for example in the patents US 6,547,388 and US 2004/0051845, envisages improving the wearing stability of the glasses by the use of an accessory consisting of an elastic strap to be fixed to the free ends of the side-pieces and arranged as a loop behind the user's head so as to grip the neck.

In this way, the strap forms an elastic loop around the user's head and allows the glasses to be fixed in their correct position in a very reliable manner.

These elastic accessories, apart from having proved to be not very practical, are also constructionally complicated and in particular uncomfortable, resulting in the nose pads of the glasses pressing excessively on the nose and causing discomfort.

Therefore all the designs of side-pieces known hitherto and described briefly above have proved in practice unable to combine a high degree of stability and comfort, being able to ensure, depending on the circumstances, only one of the abovementioned characteristics, both of which are needed to provide a high-performance side-piece in particular for use on glasses intended for use in a sporting environment.

### Disclosure of the invention

In this situation, the problem underlying the present invention is to eliminate the drawbacks of the prior art mentioned above, by providing a side-piece for eyeglasses which improves the fit of the latter, satisfying the requirements for both comfort and good stability, in particular in a sporting environment.

Another object of the present invention is to provide a side-piece which can be easily adapted to the different size requirements of the various users.

A further object of the present invention is to provide a side-piece which is constructionally simple and operationally entirely reliable.

A further object of the present invention is to provide a side-piece which limits sweating in the zones where it makes contact with the user's head.

These objects, together with others, are all achieved by the side-piece for eyeglasses, in particular of the type intended for sports activities, according to the present invention, which comprises a bar-like linking piece which can be connected at a first end to the front frame of glasses and a long flat part which can be mechanically connected to the second end of the bar-like linking piece in a connection position along its length.

According to the present invention, the side-piece for eyeglasses is characterized in that the long flat part extends from the connection position with two arms, a first arm of which extends at least as a partial extension of the linking piece and is able to press with a first gripping surface behind the ear and a second arm of which extends at least partly towards the rear along the linking piece and is able to press with at least a second gripping surface in the temple zone.

### Brief description of the drawings

The technical characteristics of the invention, in accordance with the abovementioned objects, may be clearly understood from the contents of the claims provided below and the advantages thereof will emerge more clearly from the detailed description which follows, provided with reference to the accompanying drawings, which show a purely exemplary and non-limiting embodiment thereof, in which:

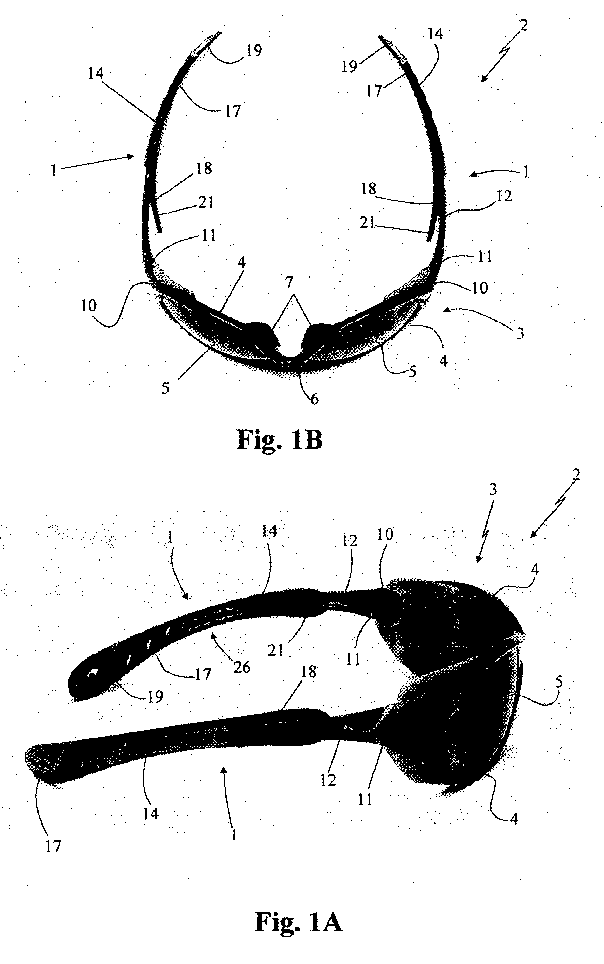

Figures 1A and 1B show two overall perspective views, from the side and from above, of an example of glasses fitted with the side-pieces according to the present invention;

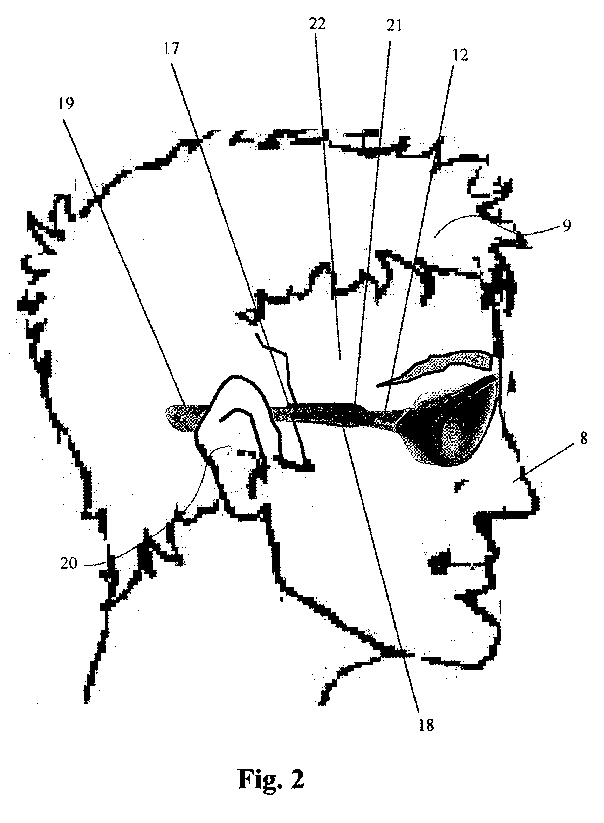

Fig. 2 shows a side view of the glasses according to Fig. 1 fitted onto an imaginary head;

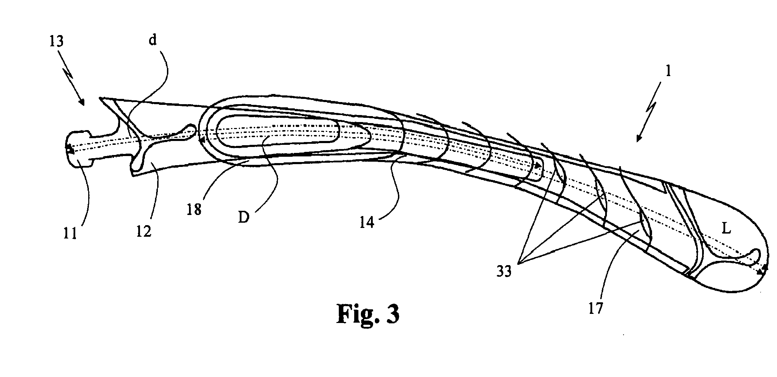

Fig. 3 shows an external side view of the side-piece according to the present invention;
Fig.4 shows an internal side view of the side-piece according to the present invention;
Fig. 5 shows an enlarged detail of the side-piece according to Figure 4;

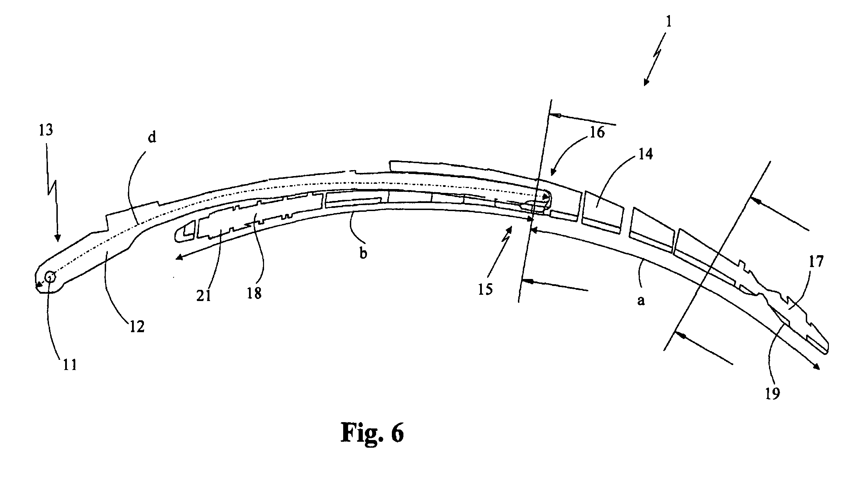

Fig. 6 shows a longitudinally sectioned view of the side-piece according to the present invention;

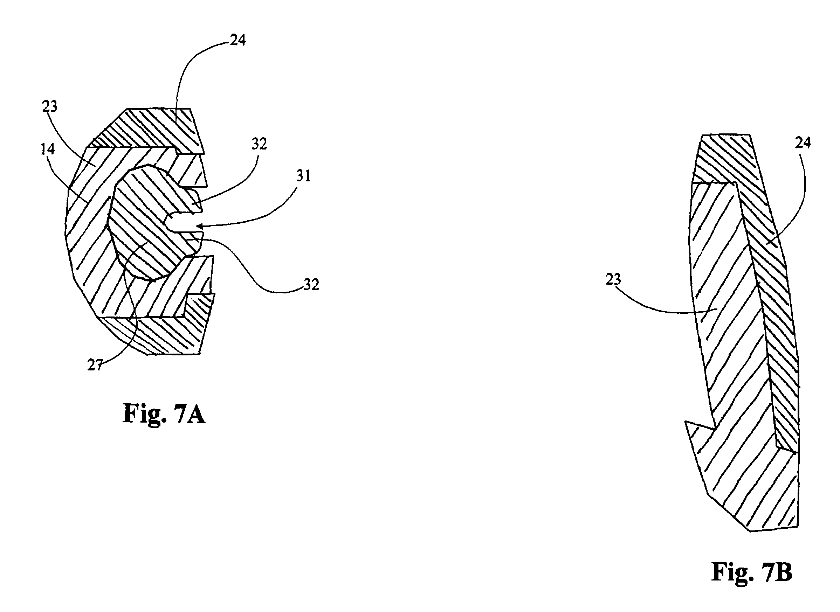

Figs. 7A and 7B show two cross-sections through the side-piece along the lines A-A and B-B, respectively, of Figure 4.

### Detailed description of a preferred example of embodiment

With reference to the accompanying drawings, 1 denotes overall the side-piece for eyeglasses according to the present invention.

The side-piece may be used for the manufacture of glasses 2 of any type both of the conventional nature and of the kind used for sports activities. However, owing its notable comfort and stability characteristics, it will be advantageously employed for the manufacture of glasses to be used preferably in a sporting environment.

The glasses 2 on which the side-piece 1 according to the invention is mounted is not the subject of a specific claim and therefore will be described hereinbelow only in brief, its constructional principles being well known to a person skilled in the art.

The glasses 2 are usually provided with a front frame 3 which may be made of both metallic and plastic material and which is traditionally formed by two rims 4 able to support a pair of lens 5 and connected centrally by a bridge-piece 6 underneath which the nose pads 7 for resting on the nose 8 of the user 9 are usually arranged.

The outer ends of the front frame 3 are provided with two projections - referred to in the associated sector as "heels" - arranged so as to project from the rims 4 and directed substantially towards the rear part of the glasses 2. They are usually fitted with the hinges 11 for connecting the side-pieces 1 of the glasses 2.

Alternatively, the front frame 3 may comprise only the heels 10 and the bridge-piece 6 directly fixed to the lens 5 without the rims 4.

With reference to the accompanying drawings, the side-piece 1 for eyeglasses comprises a bar-like linking piece 12 which can be connected at a first end 13 to the front frame 3 of the glasses 2 by means of the hinge 11, a possible embodiment of which is shown, and a long flat part 14 mechanically connected at the second end 15 of the bar-like linking piece 12 in a connection position 16 situated along its extension.

According to the idea forming the basis of the present invention the long flat part 14 extends from the connection position 16 with two arms 17, 18 situated in succession with each other in a continuous manner.

In greater detail, the first arm 17 extends as an extension of the bar-like linking piece towards the rear of the user's head 9, being inclined downwards, especially at the end part, so as to press with a first gripping surface 19 behind the ear 20.

In turn, the second arm 18 extends back along the bar-like linking piece 12 towards the front of the user's head 9, being curved so as to press with at least one second gripping surface 21 in the temple zone 22.

When the glasses 2 are worn the long flat part 14 sits astride the temple projection on the skull above the ear 20 between a depression behind the ear 20, against which the first gripping surface 19 presses, and a depression of the temple zone 22, against which the second gripping surface 21 presses.

Therefore, in order to ensure that the glasses 2 fit in a comfortable and reliable manner, the side-piece 1 rests by means of the resiliently yielding arms 17, 18 of the wide flat part 14 on the user's head 9 via the two gripping surfaces 19 and 21.

These gripping surfaces 19 and 21 exert a friction on the user's head which opposes successfully raising of the glasses 2 from the nose 8 also in the event of major stresses transmitted by the body as, for example, in the case of sports activities.

The frictional forces produced in the region of the two gripping surfaces 19, 21 generate a moment which opposes raising of the raising of the glasses as a result of rotation on the pivot point above the ear 20 of the user 9.

For good adherence of the side-piece 1 according to the invention it is of fundamental importance that the second arm 18 should extend beyond the ear 20 towards the front of the head until it reaches the broad depression zone in the temple.

The correct positioning of the side-piece 1 as mentioned above may require adjustment of the position 16 for connection of the two parts which form the side-piece 1 namely the bar-like linking piece 12 and the long flat part 14.

In greater detail, in order to position itself on the head in the manner described above, the side-piece 1 is advantageously formed as a long flat part 14 longer than the linking piece 12.

In particular, the long flat part 14, the length of which has been indicated by D, has a dimensional relationship with the linking piece 12, the length of which has been indicated by d, in the range of D/d = 1.10 - 1.80 and a dimensional relationship with the overall length L of the side-piece 1 in the range of D/L = 0.60 - 0.95.

In turn, the linking piece 12 advantageously has a dimensional relationship with the overall length of the side-piece 1 in the range of d/L = 0.40-0.70.

The first arm 17 and the second arm 18 advantageously have a dimensional relationship with each other in the range of a/b = 0.90 - 2.5.

In accordance with a preferred embodiment of the present invention, the first arm 17 is more rigid than the second arm 18 so as to provide the side-piece 1 with structural strength along the whole of its longitudinal length including the first arm 17 and so as to exert a limited elastic force in the temple zone by means of the second arm 18.

Preferably, the long flat part 14 is obtained by means of a dual-injection plastic moulding process and is therefore a two-component article, with the first component 23 more rigid than the second component 24. The two components 23 and 24 are joined together as a single body and distributed differently in the two arms 17, 18 so as to impart, as mentioned above, greater rigidity to the first arm 17 than to the second arm 18.

The second component 24 for example consists of a rubber with a high coefficient of friction preferably arranged so as to cover substantially the entire inner side 25 of the long flat part 14.

This second component contributes predominantly to the formation of the second arm 18 so as to provide the latter with a considerable flexibility aimed at exerting elastically a limited pressure above the temple zone.

Differently, the first arm 17 is mainly formed with the first component 23 so as to impart a notable rigidity to the end part of the side-piece 1 and ensure a more rigid and less elastic grip behind the ear 20 of the user 9.

The correct positioning of the side-piece 1 is ensured by adjusting means 26 able to vary the position 16 for connection between the bar-like linking piece 12 and the long flat part 14.

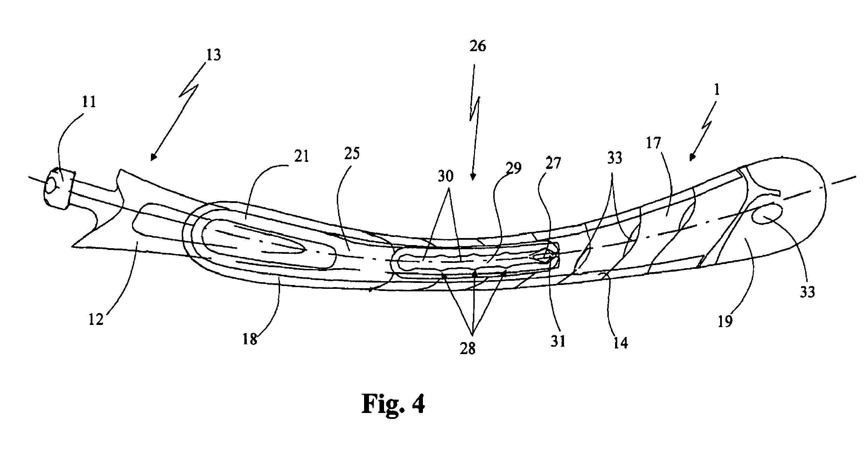

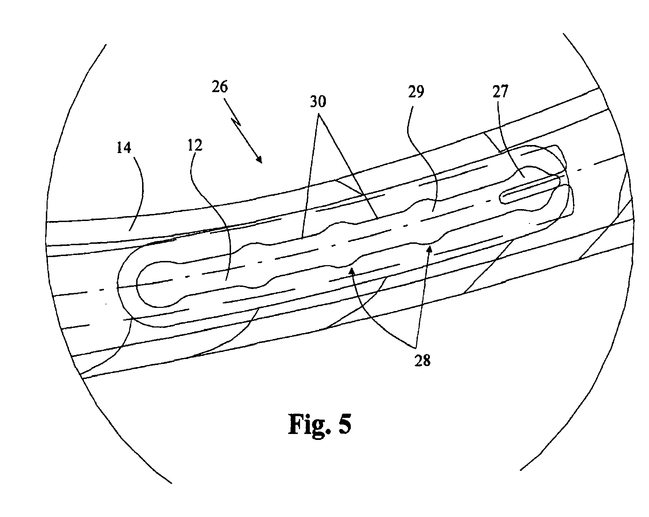

In accordance with a preferred solution of the invention, shown in detail in Figures 4 and 5, the abovementioned adjusting means 26 comprise a nib 27 fixed so as to project at the second end 15 of the bar-like linking piece 12 and able to engage in a retaining relationship selectively inside a plurality of aligned seats 28 formed along the long flat part 14.

In greater detail, the long flat part 14 is provided with a hollow portion arranged in the region of the connection position 16. The inner side 25 of the hollow portion is provided with a window in the form of a longitudinal groove 29 defining a plurality of adjacent seats 28 by means of aligned and facing teeth 30 on the two sides of the longitudinal groove 29.

The linking piece 12 is inserted with its second end 15 inside the hollow portion of the long flat part 14 so as to cause the nib 27 to project inside the groove 29 and allow the selective engagement thereof inside the aligned seats 28 defined between the teeth 30.

The nib 2 is provided with an incision 31 extending diametrally and arranged aligned with the longitudinal extension of the linking piece 12. This incision 31 defines two lugs 32 facing each other and able to engage by means of elastic deformation inside the aligned seats 28 defined between the teeth 30.

Alternatively, although the solution described above is preferable, it will be possible, without departing from the scope of protection of the present patent, to provide the incision 31 on the linking piece 12 and the nib 27 on the long flat part 14.

The long flat part 14 is therefore an arc-shaped dual-component lamina-like member with its free ends preferably having a widened shape and in particular in the form of a lobe. The long flat part 14 defines a concavity of magnitude preferably slightly greater than the convexity of the user's head 9 so as to impart to the arms 17, 18 a slight elastic deformation when they press against the said head.

It is possible to envisage one or more through-holes 33 on the long flat part 14 in order to favour the breathability of the skin and the passage of air and therefore avoid excessive sweating due to adhesion of the long flat part 14 of the side-piece 1.

The invention therefore achieves the predefined objects.

Obviously, it may assume, in its practical embodiment, also forms and configurations different from that illustrated above without thereby departing from the present scope of protection.

Moreover, all the details may be replaced by technically equivalent elements, and the dimensions, the forms and the materials used may be of any nature according to requirements.

## Claims

1. Side-piece for eyeglasses in particular of the type for sports activities, which comprises a bar-like linking piece which can be connected at a first end to the front frame of a pair of glasses and a long flat part mechanically connected to the second end of said bar-like linking piece in a connection position situated along its extension, **characterized in that** said long flat part extends from said connection position with two arms, a first arm of which extends as at least a partial extension of said linking piece and is able to press with at least a first gripping surface behind the ear and a second arm of which extends at least partly towards the rear along said linking piece and is able to press with at least a second gripping surface in the temple zone.

2. Side-piece for eyeglasses according to Claim 1, **characterized in that** said long flat part is able to fit astride the temple projection on the skull situated above the ear between a depression behind the ear where said first gripping surface is situated and a depression in the temple zone where said second gripping surface is situated.

3. Side-piece for eyeglasses according to Claim 1, **characterized in that** said long flat part has a relationship with the overall length of the side-piece in the range of 0.60 - 0.95.

4. Side-piece for eyeglasses according to Claim 1, **characterized in that** said long flat part is longer than said linking piece with which in particular it has a relationship in the range of 1.10 - 1.80.

5. Side-piece for eyeglasses according to Claim 1, **characterized in that** said linking piece has a relationship with the overall length of the side-piece in the range of 0.40 - 0.70.

6. Side-piece for eyeglasses according to Claim 1, **characterized in that** said first arm has a relationship with said second arm in the range of 0.90 - 2.5.

7. Side-piece for eyeglasses according to Claim 1, **characterized in that** said first arm is more rigid than said second arm.

8. Side-piece for eyeglasses according to Claim 7, **characterized in that** said long flat part is formed as two components, a first component of which is more rigid than the other component and which are joined together so as to impart greater rigidity to said first arm than to said second arm.

9. Side-piece for eyeglasses according to Claim 1, **characterized in that** it comprises adjusting means for varying the position for connection between said bar-like linking piece and said long flat part.

10. Side-piece for eyeglasses according to Claim 9, **characterized in that** said adjusting means comprise at least one nib fixed so as project at the second end of said linking piece and able to engage in retaining relationship selectively inside a plurality of adjacent seats formed along said long flat part.

11. Side-piece for eyeglasses according to Claim 10, **characterized in that** said adjusting means envisage that said long flat part is provided with at least one hollow portion with, formed therein, a longitudinal groove defining said adjacent seats by means of opposite and aligned teeth and **characterized in that** said linking piece is inserted inside said hollow portion with said nib projecting inside said groove.

12. Side-piece for eyeglasses according to Claim 11, **characterized in that** said nib has a diametral incision aligned with the extension of the side-piece and able to define two facing lugs able to engage by means of elastic deformation inside aligned seats defined between said teeth.

13. Side-piece for eyeglasses according to Claim 1, **characterized in that** said long flat part has an inner side with a concavity able to cause gripping of the elastically yielding arms against a user's head.

14. Side-piece for eyeglasses according to Claim 1, **characterized in that** said long flat part is provided with one or more through-holes for allowing the air to pass through.

15. Side-piece for eyeglasses according to Claim 1, **characterized in that** at least one of the free ends of said long flat part delimiting said gripping surfaces has a widened shape in particular in the form of a lobe.
